**Europäisches Patentamt**

(19) **European Patent Office**

**Office européen des brevets**

(11) Veröffentlichungsnummer: **0 006 562**
**B1**

(12) ## EUROPÄISCHE PATENTSCHRIFT

(45) Veröffentlichungstag der Patentschrift:
**18.11.81**

(21) Anmeldenummer: **79101995.3**

(22) Anmeldetag: **18.06.79**

(51) Int. Cl.³: **C 08 L 33/10,** C 08 L 25/12,
C 08 L 51/04

(54) **Transparente schlagzähe Formmassen und Formteile aus diesen.**

(30) Priorität: **29.06.78 DE 2828517**

(43) Veröffentlichungstag der Anmeldung:
**09.01.80 Patentblatt 80/1**

(45) Bekanntmachung des Hinweises auf die Patenterteilung:
**18.11.81 Patentblatt 81/46**

(84) Benannte Vertragsstaaten:
**BE DE FR GB IT NL**

(56) Entgegenhaltungen:
**DE-A-2 024 940**
**DE-B-2 045 742**
**US-A-3 177 268**

(73) Patentinhaber: **BASF Aktiengesellschaft,**
**Carl-Bosch-Strasse 38, D-6700 Ludwigshafen (DE)**

(72) Erfinder: **Schmitt, Burghard, Dr.-Chem.,**
**Hermannstrasse 3, D-6520 Worms (DE)**
Erfinder: **Lindenschmidt, Gerhard, Dr.-Chem.,**
**Buchenweg 11, D-6906 Leimen (DE)**
Erfinder: **Stein, Dieter, Dr.-Chem., Woogstrasse 69,**
**D-6703 Limburgerhof (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Transparente schlagzähe Formmassen und Formteile aus diesen

Gegenstand der Erfindung sind transparente, schlagzähe, thermoplastische Formmassen aus einem harten Alkylmethacrylat-Polymerisat A, einem harten Styrol/Acrylnitril-Polymerisat B und einem weichen Pfropfcopolymerisat C von Styrol und Acrylnitril auf einen Kautschuk.

Die vorliegende Erfindung geht aus von einer Formmasse, die aus der DE-AS 20 45 742 bekannt ist. In der bekannten Formmasse wird als Komponente B vorgeschlagen, 70 bis 90 Gew.-% Styrol und 30 bis 10 Gew.-% Acrylnitril anzuwenden, wobei ein Gehalt von 25 Gew.-% Acrylnitril als bevorzugt ausgewiesen ist (vgl. die Beispiele).

Die aus den bekannten Formmassen hergestellten Formteile haben jedoch den Nachteil, dass sie nur bei relativ niedrigen Verarbeitungstemperaturen transparent sind. Bei Anwendung höherer Verarbeitungstemperaturen nimmt die Transparenz von aus der Formmasse hergestellten Fertigteilen stark ab (vgl. Beispiele 5 bis 8 der vorliegenden Anmeldung). Die Anwendung höherer Verarbeitungstemperaturen ist jedoch erwünscht, um eine Verbesserung der mechanischen Eigenschaften und eine leichtere Formfüllung beim Spritzgiessen zu erzielen. Ausserdem ist bei den bekannten Formmassen eine ausgeprägte Bildung von Bindenähten von Nachteil.

Es bestand somit die Aufgabe, Formmassen zu entwickeln, die die vorstehend beschriebenen Nachteile nicht aufweisen. Diese Aufgabe wird durch die vorliegende Erfindung gelöst. Die erfindungsgemässen Formmassen zeigen eine von der Verarbeitungstemperatur unabhängige Transparenz, d.h. die Formmassen können bei höheren Temperaturen verarbeitet werden und weisen dann eine bessere Mechanik auf.

Dass die Transparenzverminderung mit zunehmender Verarbeitungstemperatur bei nur wenig veränderter Zusammensetzung der Formmassen, d.h. durch eine geringfügige Änderung im Bereich der Komponente B verhindert werden kann, konnte der Fachmann nicht erwarten. Ausserdem konnte er nicht erwarten, dass die erfindungsgemässen Formmassen eine verminderte Bindenahtmarkierung bzw. Angussmarkierung zeigen würden.

Die vorliegende Erfindung betrifft daher transparente, schlagzähe Formmassen, enthaltend ein Gemisch von im wesentlichen

A) 20 bis 80 Gewichtsteilen eines Methylmethacrylat-Polymerisats aus 90 bis 100 Gew.-% Methylmethacrylat und 10 bis 0 Gew.-% eines Alkylacrylats mit 1 bis 8 Kohlenstoffatomen im Alkylrest,

B) 10 bis 50 Gewichtsteilen eines Styrol/Acrylnitril-Polymerisats, aus Styrol als Hauptmenge,

C) 10 bis 50 Gewichtsteilen eines Propfcopolymerisats erhalten durch Pfropfung von
a) 10 bis 70 Gew.-% eines Gemisches aus Styrol und Acrylnitril im Gewichtsverhältnis von 6:4 bis 90:10 auf

b) 90 bis 30 Gew.-% eines Kautschuks mit einer Glastemperatur unterhalb von −30°C, wobei sich die Gewichtsteile auf 100 addieren und die Differenz zwischen dem Brechungsindex der Komponente C und dem Brechungsindex des Gemisches der Komponente A und B weniger als 0,005 beträgt, und

D) gegebenenfalls üblichen Zusatzstoffen in Mengen bis zu 50 Gew.-%, bezogen auf die Summe der Komponenten A, B und C.

Die Formmasse ist dadurch gekennzeichnet, dass die Komponente B aus 78 bis 88 Gew.-% Styrol und 22 bis 12 Gew.-% Acrylnitril besteht.

Für die erfindungsgemässe Formmasse wird als harte Komponente A ein Homopolymerisat des Methylmethacrylats verwendet; es sind jedoch auch Copolymerisate von Methylmethacrylat mit bis zu 10 Gew.-% eines Alkylacrylats mit 1 bis 8 Kohlenstoffatomen im Alkylrest beispielsweise Methacrylat und Butylacrylat, verwendbar. Durch den Einbau von Alkylacrylaten in das Methylmethacrylat-Polymerisat wird die Fliessfähigkeit der Komponente A und damit auch, die der Gemische verbessert. Methylmethacrylat-Polymerisate können durch Substanz-, Lösungs- oder Perlpolymerisation nach bekannten Methoden hergestellt werden. Methylmethacrylat-Polymerisate, insbesondere solche mit einem Alkylacrylat-Gehalt von 0,5 bis 7,0 haben noch eine ausreichende Wärmeformbeständigkeit. Die bevorzugt angewendeten Homo- bzw. Copolymerisate besitzen Gewichtsmittelwerte des Molekulargewichts, bestimmt durch Lichtstreuung in Chloroform, im Bereich von 60 000 bis 300 000 und sind im Handel erhältlich.

Die harte Komponente B der erfindungsgemässen Formmasse stellt im wesentlichen dar ein Copolymerisat aus 78 bis 88 Gew.-% Styrol und 22 bis 12 Gew.-% Acrylnitril; insbesondere wird ein Bereich von 15 bis 20 Gew.-% AN in der Komponente B bevorzugt, ausserhalb dieses Bereiches der Zusammensetzung erhält man bei Verarbeitungstemperaturen ≥240°C trübe Formteile, die Bindenähte aufweisen. Die Copolymerisate können nach allen bekannten Verfahren hergestellt werden, beispielsweise durch Substanz-, Lösungs-, Suspensions- oder Emulsionspolymerisation. Bevorzugt werden in Lösung erzeugte Copolymerisate verwendet. Die Copolymerisate sollen Molekulargewichte im Bereich von 60 000 bis 300 000 aufweisen und werden bevorzugt nach folgendem Verfahren hergestellt (vgl. GB-PS 1 472 195). Styrol/Acrylnitril Copolymerisate haben, verglichen mit der Komponente A, eine gute Fliessfähigkeit. Diese Eigenschaft wird entsprechend dem Gehalt an Komponente B auch auf die erfindungsgemässe Formmasse übertragen.

Die weiche Komponente C der erfindungsgemässen Formmasse stellt im wesentlichen dar ein Pfropfcopolymerisat aus 10 bis 70, vorzugsweise 20 bis 60 Gew.-% eines Gemisches aus Styrol und Acrylnitril als Pfropfreis im Gewichtsverhältnis 6:4 bis 90:10 auf 90 bis 30, vorzugsweise 80 bis 40 Gew.-% eines Kautschuks als Pfropfgrundlage mit einer Glastemperatur unterhalb von −30 °C. Die verwendeten Kautschuke müssen elastomere Eigenschaften haben, damit sie eine Verbesserung der Schlagzähigkeit der erfindungsgemässen Mischung bewirken. Ein Mass für diese elastomere Eigenschaft ist die Glastemperatur nach K. H. Illers und H. Breuer, Kolloid-Zeitschrift 176, S. 110, 1961. Als Pfropfgrundlage kommen beispielsweise in Frage: Dienpolymerisate, wie Polybutadien oder Polyisopren, Copolymerisate von Butadien mit Isopren, Alkylacrylaten, Alkylmethacrylaten, Styrol oder Acrylnitril, sowie Polyalkylarylate mit bis zu 8 C-Atomen im Alkylrest; bevorzugt sind Acrylester-Copolymerisate, die mindestens 30 Gew.-% eines Alkylacrylats mit höchstens 8 Kohlenstoffatomen im Alkylrest einpolymerisiert enthalten. Bevorzugte Acrylsäureester sind Äthylacrylat, Butylacrylat und Äthylhexylacrylat. Ebenso wie die Diene können die Acrylsäureester auch Comonomere wie Butadien, Styrol, Acrylnitril, Alkylmethacrylate oder Vinyläther, oder Mischungen davon enthalten. Die Acrylsäureester-Copolymerisate können gegebenenfalls durch Einpolymerisieren von mindestens zwei Doppelbindungen enthaltenden Comonomeren teilweise vernetzt sein.

Die Herstellung des Pfropfcopolymerisats C erfolgt durch Polymerisation eines Gemisches von Styrol und Acrylnitril in Gegenwart des Kautschuks, vorzugsweise in wässriger Emulsion.

Die Mischung soll 20 bis 80, vorzugsweise 30 bis 60 Gewichtsteile der Komponente A; 10 bis 50, vorzugsweise 10 bis 40 Gewichtsteile der Komponente B und 10 bis 50, vorzugsweise 20 bis 40 Gewichtsteile der Komponente C enthalten. Die erfindungsgemässen Formmassen können, bezogen auf das Gemisch aus A, B und C noch bis zu 50 Gew.-% üblicher Zusatzstoffe enthalten. Als Zusatzstoffe kommen beispielsweise in Betracht:

Styrol/Maleinsäureanhydrid-Copolymerisate, Füllstoffe, Fabrstoffe, Stabilisatoren, Schmiermittel und Antistatika.

Das Vermischen der Komponenten und gegebenenfalls der Zusatzstoffe erfolgt bevorzugt in der Schmelze. Die Komponenten werden bei Temperaturen zwischen 200 und bis 300 °C verarbeitet. Es ist auch möglich, Lösungen oder Suspensionen der Komponenten zu vermischen und das Lösungs- oder Suspensionsmittel anschliessend zu entfernen.

Falls auf gute mechanische Eigenschaften bei verminderter Bindenahtmarkierung und guter Transparenz der Formteile Wert gelegt wird, wird die nachfolgende Verarbeitung der Formmasse im Bereich von 250 bis 300 °C, insbesondere bei Temperaturen von 260 bis 280 °C, vorgenommen. Die Verarbeitung erfolgt auf Spritzgussmaschinen und Extrudern.

Eine Voraussetzung für die Transparenz der erfindungsgemässen Formmassen ist, dass die Differenz zwischen dem Brechungsindex der weichen Komponente C und dem Brechungsindex des Gemisches der beiden harten Komponenten A und B weniger als 0,005 beträgt. Der Brechungsindex des Gemisches der harten Komponenten A und B errechnet sich durch Linearkombination aus den Brechzahlen der Einzelkomponenten mit deren Gewichtsanteilen. Bei vorgegebenem Brechungsindex der Weichkomponente C wird der Brechungsindex der Hartkomponente durch geeignete Wahl des Verhältnisses A:B angeglichen. Eine weitere wesentliche Voraussetzung für die Unabhängigkeit der Transparenz von der Verarbeitungstemperatur ist die Zusammensetzung der Komponente B.

Man erhält erfindungsgemäss durch einfaches Abmischen der Komponenten A, B und C transparente Formmassen mit sehr guten mechanischen Eigenschaften, insbesondere hoher Schlagzähigkeit und guter Transparenz auch bei hohen Verarbeitungstemperaturen, verminderter Bindenahtmarkierung, guter Wärmeformbeständigkeit und befriedigender Fliessfähigkeit.

Aus den erfindungsgemässen Formmassen können hauptsächlich durch Verspritzen oder Aufblasen Formteile hergestellt werden. Man kann die Formmassen auch verpressen, kalandrieren, extrudieren oder vakuumformen. Sie können überall dort eingesetzt werden, wo die Zähigkeit der herkömmlichen transparenten Kunststoffe nicht genügend ist; beispielsweise bei Automobilheckleuchten, durchsichtigen Haushaltsgeräten, Spielwaren, Beschichtungen, z.B. in Verbunden mit den verschiedensten Werkstoffen.

Die auf die Konzentration C bezogenen Viskositätszahlen $\eta sp/c$ in [cm³/g] werden in einer 0,5%igen Lösung in Chloroform (für A) bzw. in Dimethylformamid (für B) gemessen. Der Vicat-Erweichungspunkt in (°C) wurde nach DIN 53460, Verfahren B, in Siliconöl bestimmt. Die Lochkerbschlagzähigkeit in kg/m² wurde in einem Schlag-Biege-Versuch an Normkleinstäben gemessen. Die Methode ist in der Zeitschrift Kunststoffe 57 (1967) S. 825 beschrieben. Die Normkleinstäbe werden bei den Beispielen angegebenen Massetemperaturen von 220 °C bis 280 °C spritzgegossen. Der Brechungsindex $n_D^{25}$ wurde mit einem Abbé-Refraktometer nach der Methode zur Messung der Brechungsindizes bei festen Körpern bestimmt (s. Ullmanns Encyklopädie der technischen Chemie, Bd. 2/1, S. 486; Herausgeber W. Foerst; Urban & Schwarzenberg. München-Berlin, 1961). Für die nachstehend beschriebenen Versuche wurden die nachfolgend näher bezeichneten Polymerisate $A_1$ und $A_2$, Copolymerisate $B_1$ bis $B_3$ und Pfropfcopolymerisate $C_1$ bis $C_4$ verwendet:

(Alle Verhältnisangaben in Gew.-%; Teile in Gewichtsteile.)

$A_1$ Polymethylmethacrylat ($n_D^{25}$ = 1.491, Viskositätszahl (VZ) 50)

$A_2$ Copolymerisat aus Methylmethacrylat und Methylacrylat im Verhältnis 95,8/4,2 ($n_D^{25}$ = 1.492, VZ = 52);

$B_1$ Copolymerisat aus Styrol und Acrylnitril im Verhältnis 80:20 ($n_D^{25}= 1.575$, VZ = 104);

$B_2$ Copolymerisat aus Styrol und Acrylnitril im Verhältnis 85:15 ($n_D^{25}= 1.577$, VZ = 100);

$B_3$ (Vergleichsversuch) Copolymerisat aus Styrol und Acrylnitril im Verhältnis 75:25 ($n_D^{25}= 1.573$, VZ = 104);

$C_1$ Pfropfcopolymerisat von 25% Styrol und Acrylnitril (70:30) auf 75% eines Emulsionscopolymerisats aus 60 Teilen Butylacrylat und 40 Teilen Butadien ($n_D^{25}= 1.508$);

$C_2$ Pfropfcopolymerisat von 25% Styrol und Acrylnitril (80:20) auf 75% eines Emulsionscopolymerisates aus 60 Teilen Butylacrylat und 40 Teilen Butadien ($n_D^{25}= 1.511$);

$C_3$ Pfropfcopolymerisat von 40% Styrol und Acrylnitril (75:25) auf 60% eines teilweise vernetzten Polyacrylsäurebutylesters ($n_D^{25}= 1.510$);

$C_4$ Pfropfcopolymerisat von 40% Styrol und Acrylnitril (70:30) auf 60% eines Emulsions-Polybutadiens ($n_D^{25}= 1.538$).

Zur Herstellung der erfindungsgemässen Formmasse und für Formmassen vom Stand der Technik wurde jeweils eine Mischung aus je einer Komponente aus der Reihe A, B und C in einem Fluidmischer vorgemischt und anschliessend auf einem Co-Kneter bei etwa 220 bis 230°C unter Stickstoff innigst verknetet. Die Verweilzeit betrug etwa 4 Minuten. Das dabei erhaltene Granulat wurde auf einer Einwellen-Extruder-Schnecke aufgeschmolzen und zu gleichmässigem, für die Spritzgussverarbeitung geeignetem Granulat abgeschlagen.

Beispiele

In den Versuchen 1 bis 4 (vgl. Tabelle) sind Eigenschaften von Formmassen gemäss vorliegender Erfindung beschrieben; die Versuche 5 bis 8 repräsentieren den Stand der Technik gemäss DE-AS 2 045 742. In allen Versuchen war die Differenz zwischen dem Brechungsindex der Komponente C und dem entsprechenden Index des Gemisches der Komponenten A und B kleiner als 0,005. In der Tabelle ist die Zusammensetzung der Mischungen sowie die Transmission in %, gemessen bei $\lambda$ = 520 nm, angegeben. Die Transmission wurde jeweils an einer bei 220°C und bei 280°C gespritzten Probe einer 2 mm dicken Rundscheibe gemessen. Die Lochkerbschlagzähigkeit wurde an Normkleinstäben gemessen, die bei den in der Tabelle genannten Temperaturen gespritzt worden waren (vgl. letzte Spalte der Tabelle). Die in den Versuchen 1 bis 4 erhaltenen Proben zeigen kaum sichtbare Bindenahtmarkierungen; demgegenüber weisen die Massen vom Stand der Technik ausgeprägte Bindenahtmarkierungen auf. Die in der Tabelle genannten Teile beziehen sich auf das Gewicht.

| Versuch | Polymerisate Gew.-Teile | | Transmission (%) | | Bindenaht-markierung | Lochkerbschlagzähigkeit | | |
|---|---|---|---|---|---|---|---|---|
| | | | 220°C | 280°C | | 220°C | 250°C | 280°C |
| 1 | 45,1 | $A_1$ | 81 | 80 | kaum sichtbar | 14 | 15 | 16 |
| | 13,2 | $B_1$ | | | | | | |
| | 41,7 | $C_3$ | | | | | | |
| 2 | 26,4 | $A_1$ | 86 | 87 | kaum sichtbar | 18 | 18 | 20 |
| | 31,9 | $B_2$ | | | | | | |
| | 41,7 | $C_4$ | | | | | | |
| 3 | 51,7 | $A_2$ | 86 | 86 | kaum sichtbar | 14 | 17 | 22 |
| | 12,3 | $B_1$ | | | | | | |
| | 36,0 | $C_1$ | | | | | | |
| 4 | 49,35 | $A_2$ | 89 | 88 | kaum sichtbar | 16 | 17 | 20 |
| | 14,65 | $B_1$ | | | | | | |
| | 36,0 | $C_2$ | | | | | | |
| 5 | 44,8 | $A_1$ | 81 | 59 | stark ausgeprägt | 12 | 13 | 17 |
| | 13,5 | $B_3$ | | | | | | |
| | 41,7 | $C_3$ | | | | | | |
| 6 | 24,9 | $A_1$ | 84 | 61 | stark ausgeprägt | 18 | 16 | 20 |
| | 33,4 | $B_3$ | | | | | | |
| | 41,7 | $C_4$ | | | | | | |
| 7 | 51,4 | $A_2$ | 85 | 63 | stark ausgeprägt | 15 | 16 | 21 |
| | 12,6 | $B_3$ | | | | | | |
| | 36,0 | $C_1$ | | | | | | |
| 8 | 49,0 | $A_2$ | 87 | 67 | stark ausgeprägt | 15 | 17 | 21 |
| | 15,0 | $B_3$ | | | | | | |
| | 36,0 | $C_2$ | | | | | | |

**Patentansprüche**

1. Transparente, schlagzähe Formmassen, enthaltend ein Gemisch von im wesentlichen

A) 20 bis 80 Gewichtsteilen eines Methylmethacrylat-Polymerisats aus 90 bis 100 Gew.-% Methylmethacrylat und 10 bis 0 Gew.-% eines Alkylacrylats mit 1 bis 8 Kohlenstoffatomen im Alkylrest,

B) 10 bis 50 Gewichtsteilen eines Styrol/Acrylnitril-Polymerisats, aus Styrol als Hauptmenge,

C) 10 bis 50 Gewichtsteilen eines Pfropfcopolymerisats erhalten durch Pfropfung von
a) 10 bis 70 Gew.-% eines Gemisches aus Styrol und Acrylnitril im Gewichtsverhältnis von 60:40 bis 90:10 auf
b) 90 bis 30 Gew.-% eines Kautschuks mit einer Glastemperatur unterhalb von −30°C, wobei sich die Gewichtsteile auf 100 addieren und die Differenz zwischen dem Brechungsindex der Komponente C und dem Brechungsindex des Gemisches der Komponente A und B weniger als 0,005 beträgt, und

D) gegebenenfalls üblichen Zusatzstoffen in Mengen bis zu 50 Gew.-%, bezogen auf die Summe der Komponenten A, B und C,
dadurch gekennzeichnet, dass die Komponente B aus 78 bis 88 Gew.-% Styrol und 22 bis 12 Gew.-% Acrylnitril besteht.

2. Formmasse nach Anspruch 1, wobei die Komponente B) im wesentlichen 80 bis 85 Gew.-% Styrol und 20 bis 15 Gew.-% Acrylnitril enthält.

3. Formteile aus Formmassen gemäss Anspruch 1.

4. Formteile gemäss Anspruch 3, hergestellt durch Vermischen der Komponenten A), B), C) der Formmasse und gegebenenfalls von Zusatzstoffen in Lösung oder Suspension und unter Entfernung des Lösungs- bzw. Suspensionsmittels, oder in der Schmelze und anschliessendem Verarbeiten durch Spritzgiessen oder durch Extrusion im Temperaturbereich von 250 bis 300°C.

## Claims

1. A transparent, high-impact molding material comprising essentially a mixture of

A) from 20 to 80 parts by weight of a methyl methacrylate polymer consisting of from 90 to 100 per cent by weight of methyl methacrylate and from 10 to 0 per cent by weight of alkyl acrylate, where alkyl is of 1 to 8 carbon atoms,

B) from 10 to 50 parts by weight of a styrene/acrylonitrile polymer, styrene constituting the bulk, and

C) from 10 to 50 parts by weight of a graft copolymer obtained by grafting
a) from 10 to 70 per cent by weight of a mixture of styrene and acrylonitrile in the weight ratio of from 60:40 to 90:10 onto
b) from 90 to 30 per cent by weight of a rubber having a glass transition temperature below −30°C, the sum of the parts by weight being 100 and the difference between the refractive index of component C and the refractive index of the mixture of components A and B being less than 0.005,

D) with or without conventional additives in amounts of up to 50 per cent by weight, based on the sum of components A, B and C,

characterized in that component B consists of from 78 to 88 per cent by weight of styrene and from 22 to 12 per cent by weight of acrylonitrile.

2. A molding material as claimed in claim 1, wherein component B) essentially contains from 80 to 85 per cent by weight of styrene and from 20 to 15 per cent by weight of acrylonitrile.

3. Moldings made from a molding material as claimed in claim 1.

4. Moldings as claimed in claim 3 which have been produced by mixing components A), B) and C) of the molding material, with or without additives, in solution or suspension and removing the solvent or suspension medium, or in a melt, and then processing the mixture by injection-molding or extrusion at from 250 to 300°C.

## Revendications

1. Matières à mouler transparentes, résistant aux chocs, composées d'un mélange formé essentiellement de:

A) 20 à 80 parties en poids d'un polymère de méthacrylate de méthyle constitué de 90 à 100% en poids de méthacrylate de méthyle et de 10 à 0% en poids d'un acrylate d'alcoyle à radical alcoyle en $C_1$ à $C_8$

B) 10 à 50 parties en poids d'un polymère de styrène et d'acrylonitrile avec une proportion majeure de styrène

C) 10 à 50 parties en poids d'un copolymère greffé, obtenu par greffage de
a) 10 à 70% en poids d'un mélange de styrène et d'acrylonitrile dans des proportions pondérales de 60:40 à 90:10
sur
b) 90 à 30% en poids d'un caoutchouc avec une température de transition vitreuse inférieure à −30°C, la somme des parties en poids étant égale à 100 et la différence entre l'indice de réfraction de la composante C et l'indice de réfraction du mélange des composantes A et B inférieure à 0,005,
et contenant éventuellement

D) des additifs usuels en une proportion pouvant aller jusqu'à 50% de la somme des poids des composantes A, B et C,
caractérisées en ce que la composante B est formée de 78 à 88% en poids de styrène et de 22 à 12% en poids d'acrylonitrile.

2. Matière à mouler suivant la revendication 1, caractérisée en ce que la composante B est essentiellement formée de 80 à 85% en poids de styrène et de 20 à 15% en poids d'acrylonitrile.

3. Pièces moulées en une matière à mouler suivant la revendication 1.

4. Pièces moulées suivant la revendication 3, réalisées par mélange des composantes A), B) et C) de la matière à mouler et des additifs éventuels en solution ou en suspension, avec élimination subséquente du solvant ou du milieu de dispersion, ou en fusion et formage par moulage par injection ou par extrusion dans la gamme de températures de 250 à 300°C.